# EUROPEAN PATENT APPLICATION

(11) **EP 2 236 264 A1**
(43) Date of publication of application: **06.10.2010**
(21) Application number: 09156566.3
(22) Date of filing: 30.03.2009
(51) Int. Cl.: B29C 45/14, B65D 1/26, B65D 25/36

(54) **In-mould labelled packaging container**

(71) Applicant: Nestec S.A., 1800 Vevey (CH)
(72) Inventor: Fabozzi, Thierry Jean Robert, 1201 Genève (CH); Hentzel, Stéphane, 1462 Yvonand (CH)
(74) Representative: Rupp, Christian

(57) **Abstract**

The present invention proposes a container (1) for food or food ingredients, the container comprising an injection moulded support skeleton (2) present at at least a wall (4a, 4b) of the container, the support skeleton forming at least one window (5), and an in-mould label (6) being sealed to the skeleton by in-mould labelling such that it closes the at least one window (5).

## Description

### Field of the invention

The present invention relates to a packaging for storing food substance. More particularly, the invention relates to a light-weight container and comprising at least two components of different rigidity.

### Background of the invention

Solid and liquid food substances are usually stored in foodgrade liquid-tight containers typically made of plastic materials. The container may be a functional package such as a single-use capsule for preparing a beverage or a cartridge for feeding a beverage production machine with soluble coffee powder or coffee mixes. The package may be a beverage cup for simply holding a beverage or may also be food container for shortenings and the like. All these food and beverage packages are designed to store or simply hold the ingredients or beverage in a liquid-tight environment. Most of the existing packages are over-dimensioned and/or use too much packaging material. In particular, their rigidity-to-weight ratio is not optimized. Therefore, their imprint on environment can be drastically reduced by optimizing this ratio.

Moreover, certain food substances can loose their particular characteristics due to loss of gases or aroma, e.g. carbonated drinks or coffee powder, or need to be kept dry and inaccessible to oxygen and moisture to maintain freshness, e.g. coffee or milk powder. Accordingly, packaging containers with gas barrier properties can be desirable for enabling a long shelf life of the enclosed food substance.

It is known from the prior art to form a mono- or multilayered packaging container for providing a rigid and liquid-tight, eventually gas-tight, container body. Such a container body can then be hermetically sealed for example by means of a dedicated cover member.

It exists also entirely flexible packaging which offer possible alternatives to rigid packaging. One drawback of a flexible container is that it requires an external support for holding liquids in particular hot liquids and/or liquids under pressure. For instance, a flexible beverage capsule requires to be placed in a capsule holder supporting the faces of the capsule in order to avoid the walls to tear apart or burst under the pressure of liquid in the capsule.

In general, these containers are formed by thermoforming, blow moulding or injection moulding of multilayered plastic material. Usually, the plastic material consists of a polypropylene, polyethylene, and/or PET layer for obtaining a rigid container body. For obtaining gas-barrier properties, a secondary layer of plastic material such as of for example ethylene-vinyl-alcohol-copolymer (EVOH), polyamide or metallic material such as aluminium may be present.

However, the above outlined mono- or multilayered design of packaging containers suffers several drawbacks such as its relatively high weight, high manufacturing costs and poor recycling properties.

Moreover, it is known to provide a main body of a packaging container with in-mould labels having oxygen barrier properties.

Thereby, in-mould labelling (IML), which is a label moulding technique used in blow moulded, injection moulded and thermoformed containers, have in general an inner layer compatible with the plastic material which partially melts to bond to the formed plastic structure.

In general, the label is placed in the mould wherein it is held in place by vacuum or other dedicated positioning means. The mould is then closed and molten plastic resin is poured or injected into the mould in order to form the packaging container. Thereby, the adhesive of the label is activated due to the heat resulting from the injection of hot resin and thus, the label is adhered to the container, i.e. the label becomes moulded to the container wall.

EP1440903 refers to a cartridge for the preparation of a beverage with a barrier coating applied by a number of mechanisms including in-mould labelling.

JP 10129737 A for example relates to a packaging container with an opening having oxygen gas barrier properties. Thereby, an inner wall of a side face of a bottomed container main body and an inner wall of a bottom thereof is provided with in-mould labels for improving the oxygen gas barrier properties of the packaging container.

### Object and summary of the invention

Based on the known prior art, the present invention seeks to provide a packaging container of improved rigidity-to-weight ratio. Moreover, the invention aims at improving the recycling properties of such a packaging container. Moreover, for certain packaging applications, the invention aims at providing a lightweight container with possibly complicated shapes having gas barrier properties which cannot be formed by thermoforming techniques. Moreover, the invention also aims at providing a packaging container which properties can be more easily changed or optimized according to the needs (e.g., barrier property, rigidity, compressibility, etc.).

The present invention further aims at other objects and particularly the solution to other problems as will appear in the rest of the present description.

The above outlined objects are especially achieved, according to a first aspect of the present invention, by a container for food or food ingredients, the container comprising a moulded support skeleton present at at least a wall of the container, the support skeleton forming at least one window, and an in-mould label being sealed to the skeleton by in-mould labeling such that it closes the at least one window.

According to the invention, a stable container for food or food ingredients can be provided with an improved light-weight design obtained by a rigid support skeleton at least partially supporting the in-mould label which closes the at least one window formed by the support skeleton. Thereby, the support skeleton and the in-mould label form preferably at least a lateral and a transversal wall, e.g., a bottom wall, of the container and thus constitute a storing space or receiving chamber for food or food ingredients.

Thereby, the in-mould label is preferably arranged on the outer surface of the packaging container, i.e. opposite from the inner storing space or receiving chamber constituted by the support skeleton and in-mould label. However, the in-mould label may also be arranged on the inner surface of the packaging container. In another preferred embodiment, both the inner and outer surface of the support skeleton may be covered at least partially by an in-mould label sealed to the support skeleton.

As the container is essentially made of a support skeleton and a thinner label for closing the larger surfaces of the container, the ratio of rigidity to weight of the container can be drastically increased. Preferred materials for the support skeleton are PP, RPP, PE plastics. Degradable plastics may also be used such as starch-based polymers and thermoplastics containing a degradating agent. The plastic may be biodegradable and/or degradable under light, oxygen or water. An example of biodegradable plastic is poly-lactic acid. However, other plastic materials may be found appropriate for bonding to the in-mould label by means of injection moulding.

The in-mould label is preferably made of plastic materials such as PP or a multilayer comprising at least one plastic layer such as PP and at least one barrier layer such as EVOH, aluminium, aluminium oxide (AlOₓ), SiO₂, polyamide. Furthermore, the label may also comprise resin layer(s) for decorative purpose such as on its outer surface. The in-mould label may be of multilayered design and thus comprise several layers of different plastic material arranged above each other. One of these layers can be gas barrier layer such as EVOH.

The thickness of the in-mould label is preferably between 20 and 200 µm, more preferably between 50 and 120 µm. Thereby, at the window portions of the support skeleton which are covered by the in-mould label, the in-mould label preferably constitutes the only outer wall of the packaging container. For certain containers, the in-mould label may comprise increased gas barrier properties compared to the support skeleton.

Hence, the gas barrier properties of the container can be particularly enhanced in strategic areas of the containers covered by the in-mould label. Accordingly, such a container is particularly useful in preventing transfer of gases such as water vapour, carbon dioxide, oxygen and nitrogen through at least the portions of the container which are covered by the in-mould label. Moreover, the weight of the container is minimized by at the same time maintaining the sealing functions thereof.

In a preferred embodiment, the at least one window is fully enframed by the support skeleton. More preferably, the support skeleton comprises a plurality of windows which are covered by the in-mould label. Thereby, the windows of the support skeleton are preferably hermetically sealed by the in-mould label being connected to the skeleton.

In a preferred embodiment, the skeleton comprises axial and/or transversal links being arranged to form the plurality of windows. Thereby, the links particularly serve the purpose of providing a support or frame of controlled rigidity for the rather flexible in-mould label. Thereby, the skeleton may comprise links of any geometrical shape designed to support the in-mould label. In general, the thickness of the links is comprised between 0.1 and 5 mm and the width of the links comprised between 2 and 10 mm.

Furthermore, the axial and/or transversal links may be arranged to form a fine support net providing a rigid support for the in-mould label. The terms "axial" or "transversal" do not necessarily mean a direction purely parallel or orthogonal to a longitudinal axis of the container but these directions may be inclined relative to the longitudinal axis or to the orthogonal to this axis.

Preferably, at least the lateral walls of the container comprise intermediate windows of the support skeleton.

In a preferred embodiment the support skeleton is designed to be easily compacted by e.g. twisting or compressing the container in one or more privileged directions. The skeleton can thus be designed for providing a lesser resistance to compression in at least one privileged direction such as by providing an easy bendable or breakable skeleton, for example by specially oriented links and/or zones of reduced thickness and/or weakened areas. Accordingly, enhanced recycling properties of the container can be obtained. In a possible mode, the support skeleton may therefore comprise predetermined weakened zones such as e.g. grooves or recessions at which the links of the support skeleton are bent or broken when compressing, twisting or pinching the container by a dedicated device or a human operator for example.

Accordingly, the size of the container after usage thereof can be significantly reduced into a compressed format thereby enhancing the recycling properties thereof.

The in-mould label connected to the support skeleton may be at least partially transparent or translucent. Hence, the content of the container may be inspected from outside. Accordingly, a stable light-weight container made of plastic material can be provided which is at least partially transparent or translucent. Furthermore, the label may bear decorative or identification elements such as brands, logos, names, pictures, etc. In particular, at least the outer surface of the in-mould label can be printed. Thereby, several different printing processes, such as flexography, offset, screen and hot stamping may be applied.

In addition, the container may comprise a reclosable lid member attached to the support skeleton. Accordingly, a reclosing of the container after opening thereof is possible. Thereby, the reclosable lid member may as well be formed of a support skeleton forming at least one window portion which is covered by a dedicated in-mould label.

For connecting the reclosable lid member to the container body, any suitable means such as e.g. clipping, adhesive, screw threads and/or a pivoting joint may be provided. The reclosable lid member may as well be formed as an integral part of the packaging container. Accordingly, the support skeleton may have at least one portion protruding from the container main body which is suitable for forming a lid portion of the container.

Furthermore, additional sealing means may be provided between the container and the lid member in order to improve the gas barrier properties of the portion of the container to which the reclosable lid member is attached.

Preferably, the support skeleton comprises a first upper circumferential section and a second lower circumferential section constituting, respectively, a top and a bottom rim portion of the container. Thereby, it should be understood that the circumferential upper and lower sections may be of any suitable shape constituting a rigid support at said upper and lower container sections. In particular, the upper and lower circumferential sections may be, for example, of round, squared, rectangular, pentagonal or hexagonal shape.

A lower support of the container such as a stand may be integrally formed with the support skeleton. Thereby, the support or stand is preferably integrally formed with the lower circumferential section of the packaging container.

The support links of the support skeleton are preferably connected to the upper and lower circumferential sections of the support skeleton in order to control the rigidity of the skeleton.

Furthermore, the container may further comprise a gas-tight cover member being arranged at the upper and lower circumferential sections of the support skeleton. Thereby, the cover member may be a membrane or any other gas-tight means suitably designed for being sealed to the upper and/or lower circumferential sections of the support skeleton. Hence, the container can be sealed by said gas tight cover members in order to enhance the shelf life of the food or food ingredients present in the container.

In an embodiment, at least the lateral wall of the container is essentially formed by the in-mould label. Thereby, the term "essentially" is to be understood as that most of the surface of the at least outer lateral wall of the container is constituted by the in-mould label only.

Thereby, the rigid support skeleton only supports the in-mould label from being largely deflected and thus, a very thin, light and liquid-tight or even, if needed, a gas-tight outer surface of the container is obtained.

In a second aspect, the invention proposes a method for manufacturing a container for food substance, the method comprising the steps of positioning an in-mould label into a mould, injecting of a plastic material into the mould such that it forms a support skeleton having at least one window portion closed by the label.

Accordingly, an in-mould label of a predefined shape suitable for forming at least a lateral and/or a transversal portion of the container to be manufactured is cut out from raw material and is placed into a mould having an inner surface corresponding to the outer surface of the plastic container. Then, the mould is closed and plastic material is injected into the mould to form the rigid support skeleton which preferably comprises a plurality of axial and/or transversal support links to which the in-mould label is sealed. Thereby the at least one window portion of the support skeleton is covered and thus sealed by means of the in-mould label.

The in-mould label is preferably constructed of a material chosen amongst paper, film material plastic and combinations thereof, which is able to tolerate the heat from the moulding process. Due to the in-mould labelling process, the need for assembling the label by a separate operation to the skeleton is eliminated. Accordingly, the production can be carried out in a minimal number of steps and with rationalized equipment and labour.

The label can be provided with a printing thereon. At least one of its layers is printed. Thereby, several different printing processes, such as flexography, offset, screen and hot stamping may be applied. The in-mould label is also preferably water, grease, weather, and scuff resistant.

After the label is bonded to the support skeleton, the in-mould label appears as an integral part of the container and thus, usually no steps, recesses or ridges are visible at the overlapping portions of the support skeleton and the in-mould label. Accordingly, the shelf appeal of the container is enhanced.

Preferably, the mould to be used is formed such that the support skeleton being formed by the injected plastic material is positioned relative to the in-mould label such that it abuts only on a portion of the in-mould label. More preferably, at least the lateral and/or bottom wall of the container is essentially formed by the in-mould label. Accordingly, a large portion of the lateral and/or bottom wall of the container is constituted by the in-mould label. Thereby, the rather flexible in-mould label is supported particularly by the links of the support skeleton which are preferably connected to at least an upper and lower circumferential section of the container.

During moulding the label to the support skeleton, the side portions respectively the circumferential edges of the precut in-mould label are preferably arranged within the mould such that the circumferential edges or side portions are fully supported by the correspondingly arranged support links of the support skeleton. Hence, a bonded arrangement of the support skeleton and in-mould label is obtained.

The label may be heated before the injection moulding operation. Heating of the label may compensate for the contraction of the plastic of the skeleton which may cause wrinkles on the label after cooling of the container. Heating of the label can be carried out in an oven or by contact in the injection mould.

A container manufactured by means of the method according to the present invention may be of any geometrical shape and design. The container may be in a shape of e.g. a receptacle for receiving liquid comestibles. Moreover, other shapes such as rectangular shaped storages boxes may be formed by the method according to the invention in order to provide a light-weight container with improved gas barrier properties.

### Brief description of the drawings

Further features, advantages and objects of the present invention will become apparent for the skilled person when reading the following detailed description of embodiments of the present invention when taken into conjunction with the figures of the enclosed drawings.
- Fig. 1a: and 1b relate to a first embodiment of a container according to the present invention in perspective side view, wherein the container is a receptacle for beverages.
- Fig. 2a: relates to another embodiment according to the present invention, wherein the container for storing food such as shortenings, cheese or cream, is of rectangular shaped form.
- Fig. 2b: shows the in-mould label of the container of fig. 2a before being arranged at the support skeleton.
- Fig. 2c: shows a bottom view of the container of figs 2a and 2b.
- Fig. 2d: relates to another embodiment of the support skeleton being covered by an internally and externally arranged in-mould label.
- Fig. 3a and 3b: relates to a capsule for being used in capsule-based beverage preparation devices and constituting another preferred embodiment of the present invention.
- Fig. 4a and 4b: relate to embodiments according to the present invention, wherein the container comprises a reclosable lid portion.
- Fig. 5: relates to an embodiment of the present invention being of essentially cylindrical form and constituting a refill container for beverage preparation devices.
- Fig. 6a to 6c: relate to embodiments of containers according to the present invention, wherein the support skeleton is designed to form storage boxes having an integral formed reclosable lid portion.
- Fig. 7: relates to an embodiment, wherein a see-through portion made of a transparent in-mould label is provided at a top portion or lid member designed for being connected to a receptacle or storage container.

### Detailed description of the figures

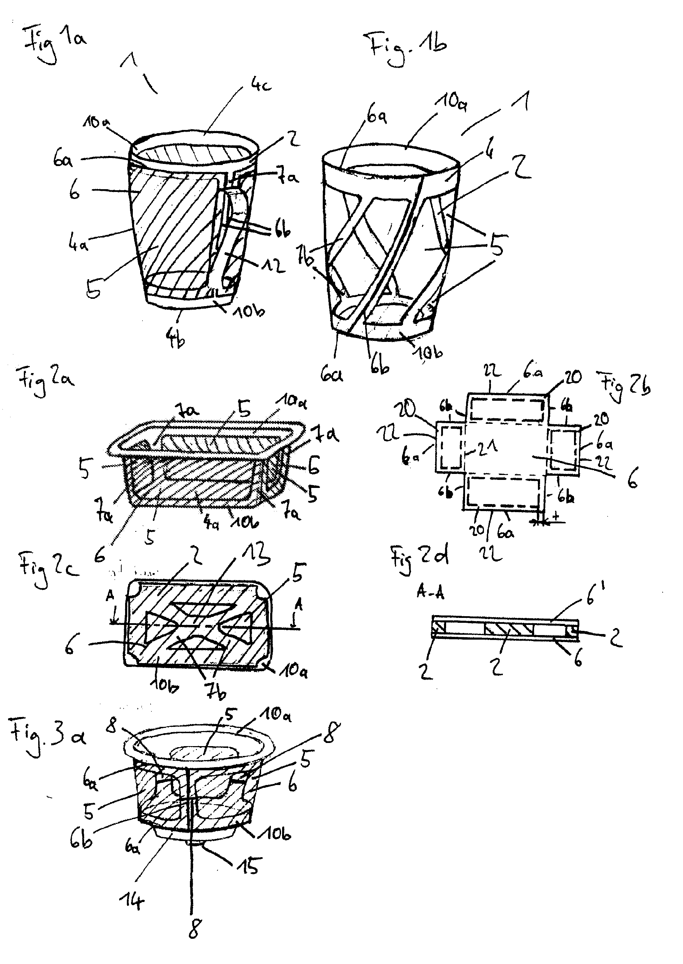

As can be seen in figures 1a and 1b, the container for food or food ingredients according to the present invention may be designed to form a cup or a cup-shaped receptacle having a lower bottom portion 4b being designed as support or stand and a cylindrical or conical shaped lateral wall portion 4a defining an inner space for receiving food or food ingredients.

The container 1 comprises a rigid support skeleton 2 comprising a lower circumferential section 10b and an upper circumferential section 10a forming the upper rim portion 4c of the receptacle which are connected to each other by means of at least one lateral extending support link 7a. Thereby, the lower circumferential section 10b may be integrally formed with the support or stand at the bottom portion 4b.

According to said embodiment, a window 5 arranged at the circumference of the container 1 is present which is enframed by means of the lateral extending support link 7a and the upper and lower circumferential sections 10a, 10b of the container 1.

To the circumference of the container 1, a label 6 is sealed by means of an injection moulding process. Thereby, the in-mould label 6 is arranged so as to fully close the window 5 present in the circumference of the support skeleton 2.

In particular, the in-mould label 6, which is preferably cut out from a sheet of raw material before the molding to the skeleton 2, is designed such that an outer rim portion 6a of the in-mould label 6 overlaps on the support skeleton 2. More particularly, as shown in figure 1a, an outer horizontal rim portion 6a of the in-mould label 6 is connected respectively to the upper rim portion 4c and the lower circumferential bottom portion 4b of the support skeleton 2. Moreover, the vertical rim portions 6b of the in-mould label 6 are connected to the at least one lateral extending support link 7a. Thereby, the in-mould label 6 is not just glued or adhered to the inner or outer surface of the support skeleton 2 but is moulded thereto and thus, integrally formed with the support skeleton 2. Accordingly, the overlapping section 20 (see figure 2b) at which the in-mould label 6 is connected to the support skeleton 2 appear as one plane outer surface without protruding rims, edges or corners of the label being apparent.

The support skeleton 2 is preferably made of any suitable foodgrade injectable plastic material such as PP, PE, PET and combinations thereof. Polypropylene can be preferred to polyethylene for its comparatively higher mechanical characteristics and its better form stability to hot liquids.

The thickness of the at least one lateral extending support link 7a is preferably between 0,2 and 5 mm. The width of the link 7a is also preferably between 2 and 10 mm. Thereby, more than one support link may be arranged between the upper and lower circumferential portions 10a,10b of the container 1. Accordingly, a more rigid support skeleton may be provided.

The in-mould label 6 is preferably a plastic film or a multi-layer being formed of known plastic material such as PP (e.g., OPP), PET plastics with or without barrier layers such as EVOH, metal, AlOₓ, SiO₂, and/or any other known material suitable to withstand the heat occurring during the injection moulding process.

The in-mould label has preferably a thickness between 20 and 200 µm and more preferably, between 60 and 120 µm. Accordingly, a very light embodiment of the packaging container is obtained, wherein the rather flexible in-mould label is supported by the rigid support skeleton 2. Typically, suitable labels are multilayers of OPP commercialized by D.V. Company (e.g., "Orange Peel Film").

As can be seen in figure 1a, handling means such as a handle bar 12 may be integrally formed with the support skeleton 2 to enable easy handling of the container 1. Thereby, the handling means 12 are preferably formed of the same material as the support skeleton by means of the injection moulding process. However, handling means of a different material, e.g., metal, may be arranged in the mould together with the in-mould label in order to be connected to the support skeleton by means of injection moulding.

As can be seen in figure 1b, the support skeleton 2 may as well be formed to comprise a multitude of transversal arranged support links 7b which are connected to the upper and lower circumferential portion 10a, 10b. Thus, a plurality of windows 5 which are enframed by the support skeleton 2 or more particular by the transversal arranged support links 7B and the upper and lower circumferential portions 10a, 10b are present. Accordingly, an enhanced rigidity of the container 1b is obtained. It should be understood that the transversal support links 7b may be arranged at any angle with respect to the upper and lower circumferential portions 10a,10b. In the present example, the links are arranged in spiral to provide a more compressible structure when the container is submitted to an axial compressive force. Moreover, additional transversal support links may be arranged in opposite direction to the links 7b, in order to intersect with these links 7b and thus, in order to form a more rigid support net.

As shown in figure 1b, the outer rim portions 6a of the in-mould label 6 is shaped so as to fully cover to upper and lower circumferential rim portions 10a,10b. Furthermore, the in-mould label 6 comprises two slanted edge portions 6b overlapping or being in vicinity to each other which are arranged during the manufacturing process to overly to one of the support links 7b. Accordingly, the transversal support link 7b is arranged essentially parallel to the slanted edge portions 6b of the in-mould label 6.

Hence, the outer edge portion 6a and the slanted edge portions 6b of the in-mould label 6 are integrally formed with the support skeleton 2 in order to cover the windows 5 of the skeleton and hermetically seal at least the lateral wall 4a of the container 1.

It is to be understood that the bottom portion or stand 4b of the container 1 may as well be formed by the support skeleton 2 having at least one window portion 5 as indicated in figure 2c and covered by a portion of the in-mould label. Thereby, the lower circumferential rim portion 10b of the support skeleton 2 is integrally formed with inwardly extending support links 7b which preferably intersect at a central portion 13. Thereby, a plurality of windows 5 enframed by the support skeleton or more particularly by the outer circumferential rim portion 10b and the support links 7b are present.

As can be seen in figure 2a, the support skeleton 2 may as well be of an essential rectangular shape having an upper rectangular shaped rim portion 10a being connected to a lower rectangular rim portion 10b by means of preferably four laterally extending support links 7a. Preferably, as shown in figure 2a, the laterally extending links 7a are arranged at the edge portions of the rectangular container in order to enable a stable support of the in-mould label 6 arranged at the outer lateral wall 4a and the outer bottom wall 4b (see figure 2c).

As can be seen in figure 2b, the in-mould label 6 is a precut label preferably cut from a thin planar foil. Thereby, the in-mould label is specifically shaped to cover at least the lateral portion 4a of the packaging container 1. As shown in figure 2b, the in-mould label suitable for being connected to the support skeleton as shown in figure 2a preferably comprises a rectangular central member 21 and four essentially rectangular shaped corner members 22 extending substantially at right angles from the central member 21. Thereby, the portions of the label 6 which are connected to the upper and lower rim portions 10a,10b and to the lateral support links 7a of the support skeleton 2 are indicated by reference numeral 20. Accordingly, the window portions 5 of the support skeleton 2 may be fully covered by the in-mould label connected to said upper and lower rim portions 10a,10b and the support links 7a. Thereby, the thickness t of the portion at which the in-mould label 6 overlaps on the support skeleton 2, thereby covering and sealing the windows 5, lies preferably at least between 1 mm and 5 mm.

As shown in figure 2d which is a sectional side view of the bottom portion 4b of the container 1 according to figure 2c, it may as well be possible to arrange an optional in-mould label 6' at the inner side of the container 1, i.e. arranged towards the storage room or receiving chamber of the container in which food or a food substance may be present. Accordingly, two in-mould labels 6,6' may be arranged at the support skeleton 2. Thereby, the in-mould labels 6,6' may at least partially overlap each other when seen in top-respectively side view.

In addition, the in-mould label 6 may be arranged at the inner surface of the support skeleton 2 and thus, directed to the storage room or receiving chamber of the packaging container. Accordingly, the inner wall of the container is constituted by the in-mould label and thus, the support links 7a,7b arranged towards the outside of the container may present holding or support means for the packaging container. This may particularly be useful for providing a receptacle for hot beverages as a user may hold the receptacle by means of the support skeleton and thus, is prevented from burning his or her fingers.

Furthermore, the support skeleton 2 can optionally comprise weakened zones 8 (see figure 3a) which enable a compression of the container 1, i.e., for reducing its size, in order to minimize the occupied space after usage and hence, enhance the recycling properties of the container.

The weakened zones 8 are preferably arranged at the transversal or lateral links 7a, 7b. The weakened zones are preferably recessions or grooves formed towards the inside or outside of the container 1 such that after overcoming predetermined compressive and/or twisting forces, the weakened zones enable a collapsing or folding of the support skeleton 2 and hence, a reduction of the container volume is obtained.

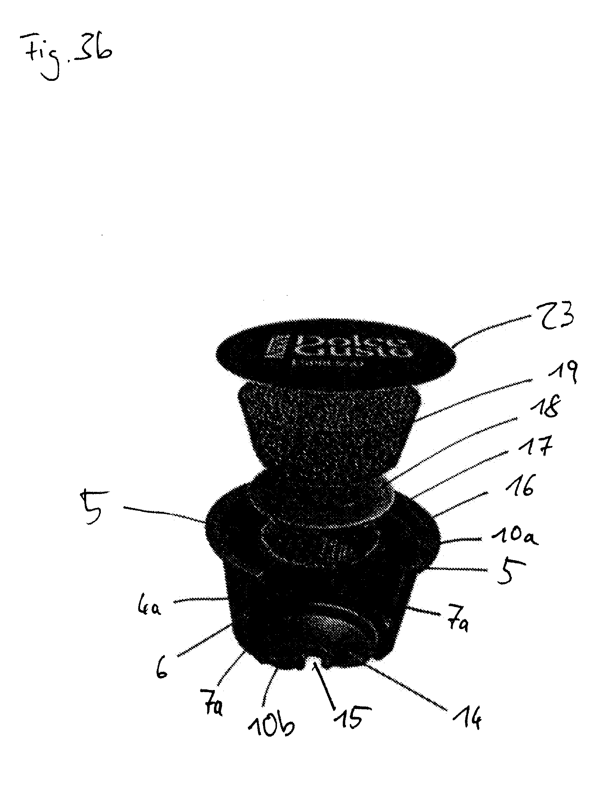

Figure 3a and 3b relate to another preferred embodiment according to the present invention, wherein the container 1 is a capsule to be used in combination with a beverage dispensing or preparation device which prepares beverages by injection of liquid to food ingredients housed in such a capsule.

The capsule 1 preferably comprises an upper circumferential rim portion 10a and a lower rim portion 10b which are connected to each other by means of preferably three lateral extending links 7a. Thereby, the lower rim portion 10b is integrally formed with a bottom portion 14 comprising an outlet 15 at which a beverage to be dispensed can leave the capsule 1.

As shown in figure 3b, a dose of food substance 19 such as for example coffee powder may be arranged within the storing volume 16 of the capsule 1. Thereby, a membrane or cover member 23 with gas barrier properties may be connected to the upper rim portion 10a, e.g. by means of a welding process, in order to hermetically seal the upper portion of the capsule 1. Moreover, a second gas barrier membrane 18, e.g., aluminium, may be connected to the lower rim portion 10b in order to hermetically seal the lower portion of the capsule 1.

Accordingly, the food substance 19 is enclosed within the capsule 1 by means of the lateral wall 4a of the capsule being gas-tight due to the in-mould label 6 covering the outer lateral surface of the capsule, and by means of the membrane members 23,18 being sealed to the upper respectively lower circumferential rim portions 10a,10b of the support skeleton 2.

Close to the lower cover member or membrane 18, opening means 17 may be arranged. The opening means 17 are preferably designed to pierce the cover member 18 in response to a pressure rise within the capsule. Hence, if fluid is injected to the capsule 1, e.g. by means of a dedicated externally provided injection member piercing the upper cover member 23, the resulting pressure rise within the capsule deflects the lower membrane 18 towards the opening means 17 which in turn pierce said lower membrane 18. Accordingly, liquid comestible resulting from the interaction of the injected liquid with the food ingredients housed within the storing space 16 of the capsule is enabled to be poured from the capsule by means of the outlet opening 15.

After liquid comestible has been poured from the capsule, the capsule may be compressed, pinched or twisted so as to break or bend the support skeleton 2 at the dedicated weakened zones 8 which are preferably present at least in the lateral extending support links 7a (see figure 3a).

As a result of the use of a gas barrier label, the volume 16 created between the two membranes 18, 23 and the label can be made gastight whereas the lower portion of the capsule can be made of injected plastic without gas barrier. An important advantage is that in-mould labeling as applied in the present invention offers the possibility to provide more complex shapes than by thermoforming and, at the same time, gas barrier properties in strategic areas of the container.

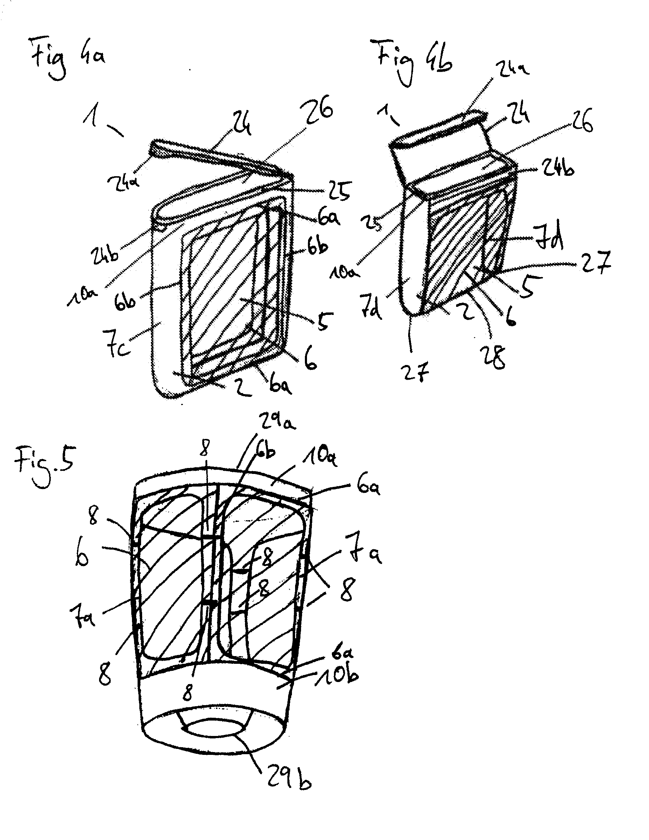

Figures 4a and 4b relate to another preferred embodiment according to the present invention, wherein the container 1 further comprises a reclosable lid member 24. The lid member 24 may be of any geometrical form suitable for closing an opening 26 of the container. Preferably, the lid member 24 is attached to the upper rim portion 10a of the container 1.

The lid member 24 is preferably made from plastic material and produced by an injection moulding process.

The lid member 24 preferably has a closing mechanism such as e.g. a latch member 24a interacting with a correspondingly shaped closing member 24b arranged in vicinity of the upper rim portion 10a.

The upper rim portion 10a may be equipped with sealing means 25 such as e.g. a sealing lip made of flexible, resilient plastic, rubber or the like which is designed to enable a sealing of the container when the lid 24 is closed by means of the closing mechanism.

As shown in figure 4a, the support skeleton 2 of the container comprises an upper rim portion 10a and a lower base portion 10b, wherein the lower base portion is integrally formed with a stand or support of the container. Hence, a stable positioning of the container on any flat surface is enabled.

The support skeleton 2 further comprises two laterally extending U-shaped support links 7c connected to the upper and lower rim portion 10a,10b. Thereby, the U-shaped support links 7c are preferably arranged at opposite lateral wall portions of the container. Between the U-shaped support links 7c and the upper and lower rim portions 10a,10b, preferably two windows 5 are present of which each is covered by an in-mould label 6. Thereby, instead of two in-mould labels 6, one in-mould label may as well be arranged to cover the whole lateral side wall portion of the container and/or the bottom portion thereof.

As can be seen in figure 4b, the container 1 may as well comprise two lateral support links 7d which are extending from the upper rim portion 10a. Thereby, the lateral support links 7d each preferably comprise a curved portion 27 at a lower portion of the container. Thereby, the support links 7d are preferably arranged in parallel at opposing lateral walls of the container. In comparison to the embodiment as shown in figure 4a, the support skeleton 2 as shown in figure 4b does not comprise a lower rim portion 10b. Instead, preferably only one in-mould label is arranged to cover the window 5 present between the two laterally arranged support links 7d, thereby forming a curved base portion 28 of the container with a flexible labeled bottom.

The in-mould label 6 may at least be partially transparent or translucent. Accordingly, the food or food substance provided within the container may be inspected.

Figure 5 relates to another preferred embodiment of a container according to the present invention. Thereby, the support skeleton 2 preferably comprises four laterally extending support links 7a which are arranged between an upper circumferential rim portion 10a and a lower circumferential rim portion 10b. The support links 7a are preferably arranged at equal distances from each other to enable a rigid support of the in-mould label 6 sealed thereto.

As can be seen in figure 5, the in-mould label 6 is preferably positioned such that the two essentially vertically arranged edge portions 6b of the label are sealed to one of the support links 7a. Moreover, the upper and lower edge portions 6a of the label are sealed to the upper respectively the lower circumferential rim portion 10a,10b.

As can be seen in figure 5, the container 1 is of a longitudinal such as a cylindrical form. Thereby, the support links 7a each comprises predefined weakened zones 8 at which the support skeleton 2 is weakened in its design. The weakened zones 8 are preferably recesses or gaps formed in the support skeleton 2 which are designed to break the rigid skeleton when the container is compressed, pinched or twisted. Preferably, at least two weakened zones 8 are arranged in each support link 7a of the container. Accordingly, the longitudinal size of the container can be significantly minimized for recycling purposes. The principle of the container and its functional use is described in more detail in European patent application No. 07111228.8 entitled: "CONTAINER FOR STORING AND UNLOADING BULK MATERIAL"

The container as shown in figure 5 is preferably used for storing and unloading a powder-like bulk food substance into a tank of a beverage preparation device. Therefore, the container 1 preferably comprises an upper cap 29a integrally formed with the upper circumferential rim portion 10a and a lower outlet 29b preferably integrally formed with the lower circumferential rim portion 10b. Thereby, the lower outlet 29b may be covered by means of a membrane or a dedicated cover member sealed to the outlet 29b and suitable for hermetically sealing the outlet.

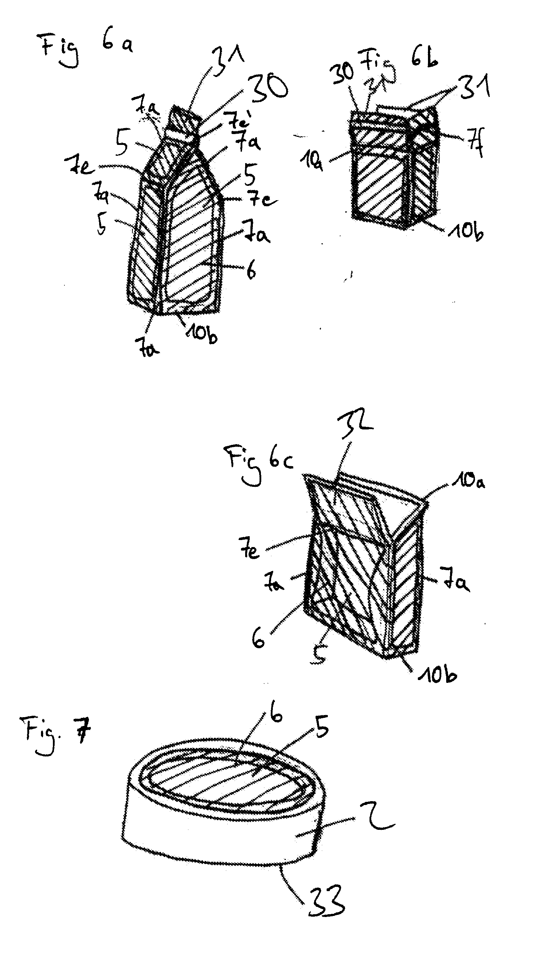

Figures 6a to 6c relate to other embodiments of the packaging container 1 according to the present invention, wherein the lid portion of the packaging container is also covered by the in-mould label 6 sealed to the support skeleton 2.

As can be seen in figure 6a, the support skeleton 2 may comprise additional support links 7e connecting the lateral support links 7a of the container. Thereby, the support links 7e are preferably arranged essentially at right angles to the lateral support links 7a. Moreover, the support links 7e may as well be arranged transversal between the lateral support links 7a. Accordingly, at least one wall portion of the container 1 is provided with at least two windows 5 which are sealed by the in-mould label 6.

In the preferred embodiment according to figures 6a and 6b, the in-mould label extends beyond the support skeleton 2 to a portion of the skeleton where no window 5 is formed. Accordingly, the in-mould label is loosely attached to the support skeleton 2 at least at one portion thereof. Preferably, as can be seen in figure 6a, the in-mould label is loosely extending at least beyond the uppermost supporting link 7e'. Moreover, a closing member 30 is provided which is preferably suitable for tacking the loosely extending endings 31 of the in-mould label 6 to each other. Said closing member 30 is preferably a clip or the like. However, the endings 31 of the in-mould label 6 may as well be welded to each other after filling of the container 1 with food or food ingredients.

As shown in figure 6b, the in-mould label 6 may as well extend over the upper rim portion 10a in order to form loose endings 31 suitable for being connected to each other for sealing purposes. Thereby, as shown in figure 6b, the endings 31 may be at least partially supported by support link 7f connected to the upper rim portion 10a. Said support links 7f are preferably semi-circle-shaped and thus support the ending 31 in an open state of the packaging container 1.

The support skeleton 2 preferably comprises support links of equal diameter respectively thickness. However, local diminution portions may be present in order to facilitate bending of the support skeleton. For example, between the support link 7f and the upper rim portion 10a, a diminution portion may be arranged to enable a facilitated bending of the support link 7f and thus of ending 31 with respect to the upper rim portion 10a.

As shown in figure 6c, lateral support links 7a of different lengths may be arranged between the upper and lower rim portion 10a, 10b. Accordingly, the upper rim portion 10a is arranged slanted with respect to the lower rim portion 10b. Moreover, at least part of the upper rim portion 10a may be designed to act as a pivot for a therefrom extending closing portion 32. Said closing portion 32 is preferably an ending of the in-mould label 6 which is at least partially supported by the support skeleton 2 of the container. Between the closing portion 32 and the upper rim portion 10a, sealing means may be arranged for enabling sealing of the container.

Figure 7 is another preferred embodiment of the support skeleton 2 according to the present invention. Thereby, the support skeleton 2 may be of cap-like shape and having at least one window 5. The cap is preferably equipped with connection means such as e.g. a thread 33 for being connected to a storage container such as e.g. a bottle. Thereby, an in-mould label 6 which is preferably transparent is sealed to the cap.

Although the present invention has been described with reference to preferred embodiments thereof, many modifications and alternations may be made by a person having ordinary skill in the art without departing from the scope of this invention which is defined by the appended claims.

In particular, it should be understood that the support skeleton 2 and thus the supporting links thereof may be of any suitable geometrical form to provide a stable support for the in-mould label 6. Thereby, the skeleton may comprise local diminutions or gussets in order to enhance the support properties of the skeleton while at the same time reducing the weight thereof.

## Claims

1. A container (1) for food or food ingredients, the container comprising
a moulded support skeleton (2) present at, at least, a wall (4a, 4b) of the container, the support skeleton forming at least one window (5), and
an in-mould label (6) being sealed to the skeleton by in-mould labelling such that it closes the at least one window (5).

2. A container according to claim 1,
wherein the at least one window (5) is fully enframed by the support skeleton (2).

3. A container according to claim 1 or 2,
wherein the support skeleton (2) comprises axial and/or transversal links (7a,7b) with a plurality of separate windows (5).

4. A container according to claim 3,
wherein the separate windows (5) are present in at least the lateral wall (4a) of the container (1).

5. A container according to any of the preceding claims,
wherein the in-mould label (6) is of lower rigidity than the support skeleton (2) and designed to liquid-tightly seal the at least one window (5).

6. A container according to any of the preceding claims,
wherein the support skeleton (2) is dimensioned and/or designed to be easily compacted by compressing, twisting or pinching the container (1).

7. A container according to any of the preceding claims,
wherein the support skeleton (2) of the container comprises predetermined weakened zones (8).

8. A container according to any of the preceding claims,
wherein the in-mould label (6) is at least partially transparent or translucent.

9. A container according to any of the preceding claims,
wherein the container (1) further comprises a reclosable lid member (9) attached to the support skeleton.

10. A container according to any of the preceding claims,
wherein the support skeleton comprises a first upper circumferential section (10a) and a second lower circumferential section (10b) constituting a top and a bottom rim portion of the container (1).

11. A container according to claim 10,
wherein the container (1) further comprises a gas-tight cover member (11a,11b) arranged at the upper and/or lower circumferential section (10a,10b) of the support skeleton.

12. A container according to any of the preceding claims,
wherein at least the lateral wall (4a) of the container (1) is essentially formed by the in-mould label (6).

13. A method for manufacturing a container (1) for food substance, the method comprising the steps of:
- positioning an in-mould label (6) into a mould,
- injecting a plastic material into the mould such that it forms a support skeleton (2) having at least one window portion closed by the label (6).

14. A method according to claim 13,
wherein the in-mould label (6) is connected to axial and/or transversal support links (7a,7b) of the skeleton (2), thereby sealing the at least one window portion (5) of the support skeleton.

15. A method according to claim 13 or 14,
wherein the in-mould label (6) and the support skeleton (2) are positioned relative to each other such that the in-mould label (6) essentially forms at least a lateral side wall (4a) of the container (1).

16. A method according to any of claim 13 to 15,
wherein the support skeleton (2) is positioned relative to the in-mould label (6) such that it abuts only on a portion of the in-mould label (6).
